# EUROPÄISCHE PATENTSCHRIFT

(11) **EP 0 464 626 B1**
(45) Veröffentlichungstag und Bekanntmachung des Hinweises auf die Patenterteilung: **18.10.1995**
(21) Anmeldenummer: 91110545.0
(22) Anmeldetag: 26.06.1991
(51) Int. Cl.: F02F 3/22, F02F 3/20

(54) **Gebauter, ölgekühlter Kolben für Dieselmotoren**
Assembled oil cooled piston for diesel engines
Piston assemblé refroidi par huile pour moteur diesel

(30) Priorität: 29.06.1990 DE 4020736; 05.06.1991 DE 4118400
(43) Veröffentlichungstag der Anmeldung: 08.01.1992
(73) Patentinhaber: KOLBENSCHMIDT Aktiengesellschaft, D-74150 Neckarsulm (DE)
(72) Erfinder: Reipert, Peter, Dr., W-7000 Stuttgart 31 (DE); Griesbach, Klaus, W-6802 Ladenburg (DE)
(74) Vertreter: Dreiss, Fuhlendorf, Steimle & Becker, Patentanwälte

(56) Entgegenhaltungen:
- EP-A- 0 189 767
- EP-A- 0 285 205
- DE-C- 3 702 694
- FR-A- 954 188

## Beschreibung

Die Erfindung betrifft einen gebauten, ölgekühlten Kolben für Dieselmotoren, insbesondere für mittelschnellaufende Dieselmotoren mit hoher Aufladung, bestehend aus einem den Kolbenbolzen aufnehmenden Kolbenkörper und einem die Ringpartie und den Feuersteg tragenden Kolbenboden, die sich über in ihrer Trennungsebene liegende Auflageflächen aufeinander abstützen und die durch in entsprechende Bohrungen eingesetzte Schrauben gegeneinander verspannt sind, wobei zwischen Kolbenkörper und Kolbenboden ein kurbelraumseitig mit einer Öffnung versehener zentraler Kühlraum besteht, von dem aus sich gegenüber der Trennungsebene geneigte, radial nach außen verlaufende, sacklochartige Ausnehmungen mit auf einem Mittelkreis liegenden Öffnungen bis in den Bereich hinter dem Feuersteg und dem Kolbenbodenrand erstrecken. Die Erfindung betrifft auch eine Ausgestaltung des Kolbens, bei der sich Kolbenkörper und Kolbenboden über auf konzentrischen Abstützbunden angeordnete, kreisringförmige Auflageflächen aufeinander abstützen und die Abstützbunde die äußere Begrenzung des zentralen Kühlraums und die radiale innere Begrenzung eines hinter der Ringpartie verlaufenden Kühlkanals bilden, von dem aus sich die sacklochartigen Ausnehmungen erstrecken und der über in einem der Abstützbunde angebrachte Überströmbohrungen mit dem zentralen Kühlraum verbunden ist.

Bei zunehmender spezifischer Motorleistung genügt die Ölkühlung eines definierten Teils des Kolbens, wie es ein Kühlkanalkolben mit ringförmigem Kühlkanal hinter der Ringpartie erlaubt, nicht mehr. Vielmehr werden Hohlräume benötigt, die alle thermisch hochbeanspruchten Bereiche des Kolbenbodens der Ringpartie und des Feuerstegs erfassen. Für derartige Einsatzzwecke sind gebaute, ölgekühlte Kolben der eingangs beschriebenen Konstruktionen aus der EP-A-0 285 205 und der EP-A-0 189 767 bekannt, bei denen der Boden aus Stahl oder hochwertigem Gußeisen und der Kolbenkörper aus Aluminium-Silizium-Kolbenlegierung oder Kugelgraphit-Gußeisen besteht. Die Kühlölzufuhr zum Kühlraum erfolgt über entsprechende Öffnungen im Kolbenschaft entweder über Pleuel und Kolbenbolzen oder über eine am Kurbelgehäuse angebrachte Spritzdüse. Die Kühlölzufuhr kann auch in umgekehrter Richtung über eine am kleinen Pleuelauge angebrachte Spritzdüse unmittelbar zum Kühlraum erfolgen. Da bei dieser Kolbenbauart mit flacher Brennraummulde die höchsten Temperaturen des Kolbenbodens von 350 bis > 400°C am äußeren Rand der Brennraummulde und im Bereich des Kolbenbodenrandes auftreten, erstrecken sich von dem Kühlraum aus gegenüber der Trennungsebene der beiden Kolbenbauteile geneigte, radial nach außen verlaufende Sacklochbohrungen bis in den Bereich hinter dem Feuersteg und dem Kolbenbodenrand. Bedingt durch die Pendelbewegung des Kühlöls in den Sacklochbohrungen wird die Wärme von der Innenseite des Kolbens abgeführt. Am halbkugelförmigen Boden der Sacklochbohrungen treten jedoch Temperaturen von 240 bis 270°C auf, die in der Nähe bzw. über dem Flammpunkt üblicher Kühlöle für Dieselmotoren liegen. Das hat zur Folge, daß im Bodenbereich der Sacklochbohrungen das Kühlöl verkokt und sich eine isolierende Ölkohleschicht bildet, die die Kühlwirkung des Kühlöls so herabsetzt, daß die Temperaturen des Kolbenbodens in dem an die Sacklochbohrungen angrenzenden Bereich unzulässig ansteigen und damit die Festigkeit des Kolbenwerkstoffs absinkt, der Kriechwiderstand verringert und die thermische Deformation erhöht werden. Dies kann zu bleibenden Verformungen und den damit verbundenen Nachteilen führen.

Es ist die Aufgabe der vorliegenden Erfindung, die vorstehend näher beschriebenen gebauten, ölgekühlten Kolben so zu gestalten, daß eine wirksamere Wärmeübertragung vom Kolben an das Kühlöl und eine schnelle Abführung der erwärmten Kühlmittelmenge gewährleistet sind.

Die Lösung dieser Aufgabe besteht darin, daß die sacklochförmigen Ausnehmungen im Querschnitt die Form eines Langlochs besitzen.

Nach einem weiteren Merkmal der Erfindung beträgt der Öffnungswinkel der Langlöcher 20 bis 80°, vorzugsweise 30 bis 60°. Durch die erfindungsgemäße Maßnahme wird die durch die Pendelwirkung des Kühlöls kühlbare Oberfläche vergleichsweise um 20 bis 30 % vergrößert, so daß die von der brennraumseitigen Wand der Langlochbohrungen durch das Kühlöl pro Zeiteinheit abgeführte Wärmemenge deutlich größer ist und damit die Temperatur in diesem Bereich entsprechend niedrig gehalten werden kann. Es wird eine Verkokung des Kühlöls und damit die Ausbildung einer wärmeisolierenden Koksschicht am Boden der Langlöcher verhindert.

Zweckmäßigerweise besitzt der Boden der Langlöcher die Form eines Muldengewölbes.

Aus der FR-A-954 188 ist ein aus einer Leichtmetall-Knetlegierung bestehender einteiliger Kolben für Dieselmotoren bekannt, bei dem sich von der Innenseite des Kolbenschafts radial nach außen gegen den Kolbenboden verlaufende Sacklochbohrungen mit langlochartigem Querschnitt erstrecken, um die Wärmeleitfähigkeit zwischen der im Kolbenboden befindlichen Brennkammer und dem Kolbenboden zu verringern. Es ist nicht daran gedacht, die Verkokung des Kühlöls am Boden der Sacklöcher zu vermeiden.

Die Erfindung ist in den Zeichnungen beispielhaft dargestellt und wird nachfolgend näher erläutert. Es zeigen:

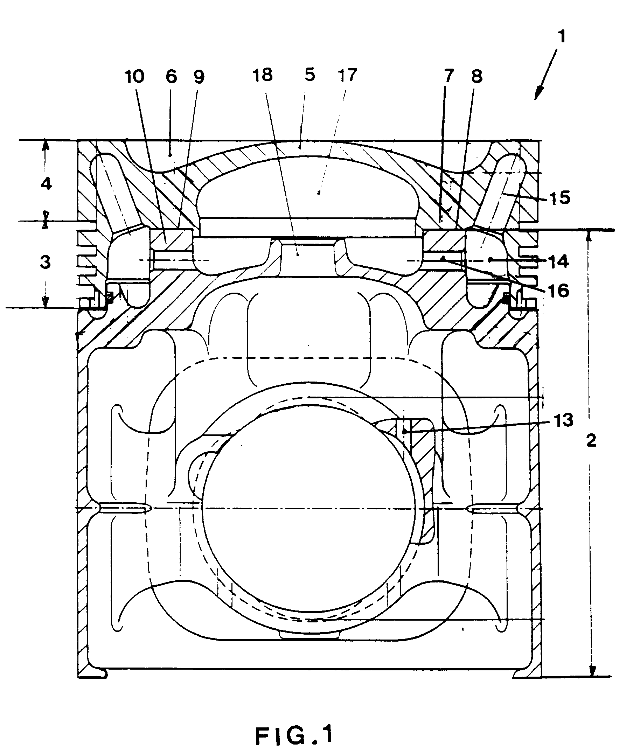

- Fig. 1: einen Schnitt durch einen gebauten, ölgekühlten Kolben für Dieselmotoren entlang der die Kolbenachse und die Achse senkrecht zur Bolzenachsrichtung einschließenden Ebene und

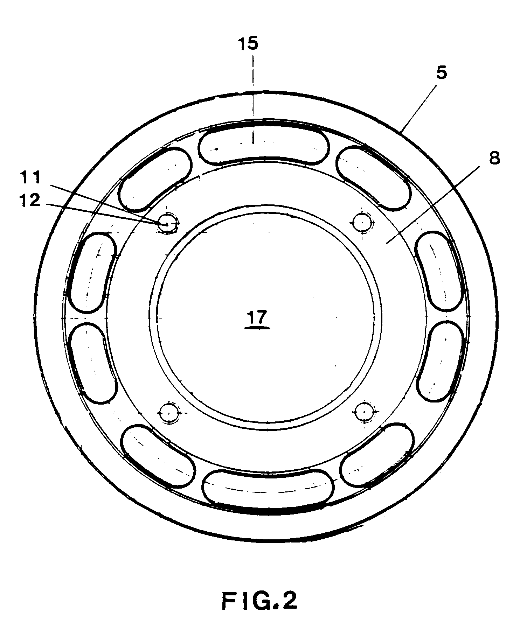

- Fig. 2: eine Draufsicht auf die Unterseite des Kolbenbodens.

Der gebaute, ölgekühlte Kolben (1) für mittelschnellaufende Dieselmotoren mit hoher Aufladung besteht aus dem den nicht dargestellten Kolbenbolzen aufnehmenden Unterteil (2) aus Gußeisen und dem aus Stahl geschmiedeten, die Ringpartie (3) und den Feuersteg (4) tragenden Kolbenboden mit flacher Brennraummulde (6). Auf der Unterseite des Kolbenbodens befindet sich ein konzentrisch angeordneter Abstützbund (7) mit einer kreisringförmigen, senkrecht zur Bolzenachse liegenden Auflagefläche (8), die an der unmittelbar gegenüberliegenden, senkrecht zur Bolzenachse liegenden Auflagefläche (9) des auf der Oberseite des Unterteils (2) konzentrisch angebrachten Abstützbundes (10) anliegt. Das Unterteil (2) und der Kolbenboden (5) sind mittels vom Kolbenfuß her durch entsprechende Gewindebohrungen (11) geführte Dehnschrauben (12) gegeneinander verspannt. Die Kühlölzufuhr erfolgt über das nicht dargestellte Pleuel und den Kolbenbolzen und die Kühlölzuleitungsbohrungen (13) zu dem hinter der Ringpartie (3) verlaufenden, radial nach innen durch den Abstützbund (10) begrenzten, ringförmigen Kühlkanal (14), von dem aus sich zehn sacklochartige, mit ihren Öffnungen auf einem Mittelkreis angeordnete Langlöcher (15), die gegenüber der Trennebene von Unterteil (2) und Kolbenboden (5) 20° geneigt radial nach außen verlaufend angebracht sind, hinter den Feuersteg (4) und den Rand des Kolbenbodens (5) erstrecken. Der ringförmige Kühlkanal (14) ist über mehrere, in dem Abstützbund (10) des Unterteils (2) angebrachte Überströmbohrungen (16) für das Kühlöl mit dem zentralen Kühlraum (17) verbunden, aus dem das Kühlöl über die Öffnung (18) in den Kurbelraum austreten kann.

## Patentansprüche

1. Gebauter, ölgekühlter Kolben (1) für Dieselmotoren, insbesondere für mittelschnellaufende Dieselmotoren mit hoher Aufladung, bestehend aus einem den Kolbenbolzen aufnehmenden Kolbenkörper (2) und einem die Ringpartie (3) und den Feuersteg (4) tragenden Kolbenboden (5), die sich über in ihrer Trennungsebene liegende Auflageflächen (8,9) aufeinander abstützen und die durch in entsprechende Bohrungen (11) eingesetzte Schrauben (12) gegeneinander verspannt sind, wobei zwischen Kolbenkörper (2) und Kolbenboden (5) ein zentraler, kurbelraumseitig mit einer Öffnung (18) versehener Kühlraum (17) besteht, von dem aus sich gegenüber der Trennungsebene geneigte, radial nach außen verlaufende sacklochartige Ausnehmungen (15) mit auf einem Mittelkreis liegenden Öffnungen bis in den Bereich hinter dem Feuersteg (4) und dem Kolbenbodenrand erstrecken, dadurch gekennzeichnet, daß der Querschnitt der Ausnehmungen (15) langlochförmig ist.

2. Gebauter, ölgekühlter Kolben (1) für Dieselmotoren, insbesondere für mittelschnellaufende Dieselmotoren mit hoher Aufladung, bestehend aus einem den Kolbenbolzen aufnehmenden Kolbenkörper (2) und einem die Ringpartie (3) und den Feuersteg (4) tragenden Kolbenboden (5), die sich über in ihrer Trennungsebene liegende, auf konzentrischen Abstützbunden (7,10) angeordnete, kreisringförmige Auflageflächen (8,9) aufeinander abstützen und die durch in entsprechende Bohrungen (11) eingesetzte Schrauben (12) gegeneinander verspannt sind, wobei die Abstützbunde (7,10) die äußere Begrenzung eines zentralen Kühlraums (17) und die radiale innere Begrenzung des hinter der Ringpartie (3) verlaufenden Kühlkanals (14) bilden, von dem aus sich gegenüber der Trennungsebene geneigte, radial nach außen verlaufende sacklochartige Ausnehmungen (15) mit auf einem Mittelkreis liegenden Öffnungen bis in den Bereich hinter dem Feuersteg (4) und dem Kolbenbodenrand erstrecken und der über in einem der Abstützbunde (7,10) angebrachte Überströmbohrungen (16) mit dem zentralen Kühlraum (17) verbunden ist, dadurch gekennzeichnet, daß der Querschnitt der Ausnehmungen (15) langlochförmig ist.

3. Kolben nach Anspruch 1 und 2, dadurch gekennzeichnet, daß der Erstreckungswinkel der Langlöcher (15) in der Ebene senkrecht zur Kolbenachse 20 bis 80°, vorzugsweise 30 bis 60°, beträgt

4. Kolben nach den Ansprüchen 1 bis 3, dadurch gekennzeichnet, daß der Boden der Langlöcher (15) die Form eines Muldengewölbes besitzt.

## Claims

1. An assembled, oil-cooled piston (1) for diesel engines, in particular for high-supercharged medium-speed diesel engines, consisting of a piston body (2) which receives the gudgeon pin and a piston head (5) which bears the ring zone (3) and the top land (4), which body and head are supported on one another by means of bearing surfaces (8, 9) located in their division plane and which are braced together by means of screws (12) inserted in corresponding bores (11), with a central cooling chamber (17) which is provided with an opening (18) on the crank-chamber side being located between the piston body (2) and the piston head (5), from which cooling chamber recesses (15) in the form of blind bores running radially outwards and inclined relative to the division plane and having openings located on a central circle extend into the region behind the top land (4) and the edge of the piston head, characterised in that the cross-section of the recesses (15) is in the shape of an elongate hole.

2. An assembled, oil-cooled piston (1) for diesel engines, in particular for high-supercharged medium-speed diesel engines, consisting of a piston body (2) which receives the gudgeon pin and a piston head (5) which bears the ring zone (3) and the top land (4), which body and head are supported on one another by means of circular bearing surfaces (8, 9) located in their division plane on concentric supporting collars (7, 10), and are braced together by means of screws (12) inserted in corresponding bores (11), the supporting collars (7, 10) forming the outer limit of a central cooling chamber (17) and the radially inner limit of the cooling duct (14) extending behind the ring zone (3), from which duct recesses (15) in the form of blind bores running radially outwards and inclined relative to the division plane and having openings located on a central circle extend into the region behind the top land (4) and the edge of the piston head, which duct is connected to the central cooling chamber (17) via overflow bores (16) made in one of the supporting collars (7, 10), characterised in that the cross-section of the recesses (15) is in the shape of an elongate hole.

3. A piston according to Claims 1 and 2, characterised in that the angle of extent of the elongate holes (15) in the plane perpendicular to the piston axis is 20 to 80°, preferably 30 to 60°.

4. A piston according to claims 1 to 3, characterised in that the base of the elongate holes (15) is in the form of a syncline.

## Revendications

1. Piston (1) assemblé refroidi par huile pour moteurs Diesel, en particulier pour moteurs Diesel moyennement rapides à alimentation élevée, composé d'un corps de piston (2) recevant l'axe de piston et d'un fond de piston (5) portant la partie de segments (3) et le pont de combustion (4), qui s'appuient l'un sur l'autre par l'intermédiaire de surfaces d'appui (8, 9) situées dans leur plan de séparation et qui sont contraints l'un par rapport à l'autre par des vis (12) insérées dans des alésages (11) correspondants, entre le corps de piston (2) et le fond de piston (5) étant située une chambre de refroidissement centrale (17) munie du côté de la chambre du vilebrequin d'une ouverture (18), à partir de laquelle chambre de refroidissement se projettent jusque dans la partie située derrière le pont de combustion (4) et le bord du fond de piston, des cavités (15) du type trou borgne, qui sont inclinées par rapport au plan de séparation, qui s'avancent radialement vers l'extérieur et qui comportent des ouvertures situées sur un cercle central, caractérisé en ce que la section transversale des cavités (15) a la forme d'un trou oblong.

2. Piston (1) assemblé refroidi par huile pour moteurs Diesel, en particulier pour moteurs Diesel moyennement rapides à alimentation élevée, composé d'un corps de piston (2) recevant l'axe de piston et d'un fond de piston (5) portant la partie de segments (3) et le pont de combustion (4), qui s'appuient l'un sur l'autre par l'intermédiaire de surfaces d'appui (8, 9) de forme circulaire situées dans leur plan de séparation et disposées sur des collerettes d'appui (7, 10) concentriques, et qui sont contraints l'un par rapport à l'autre par des vis (12) insérées dans des alésages (11) correspondants, les collerettes d'appui (7, 10) formant la limite extérieure d'une chambre de refroidissement centrale (17) et la limite radiale intérieure du canal de refroidissement (14) passant derrière la partie de segments (3), à partir duquel se projettent jusque dans la partie située derrière le pont de combustion (4) et le bord du fond de piston des cavités (15) du type trou borgne qui sont inclinées par rapport au plan de séparation, qui s'avancent radialement vers l'extérieur et qui comportent des ouvertures situées sur un cercle central, et lequel est relié à la chambre de refroidissement centrale (17) par l'intermédiaire d'alésages de trop-plein (16) placées dans l'une des collerettes d'appui (7, 10), caractérisé en ce que la section transversale des cavités (15) a la forme d'un trou oblong.

3. Piston selon la revendication 1 et 2, caractérisé en ce que l'angle de projection des trous oblongs (15), dans le plan vertical par rapport à l'axe du piston, est compris entre 20 et 80°, de préférence entre 30 et 60°.

4. Piston selon l'une des revendications 1 à 3, caractérisé en ce que le fond des trous oblongs (15) a la forme d'une voûte creuse.
